Europäisches Patentamt

European Patent Office

Office européen des brevets

(19)

(11) **EP 1 398 885 A1**

(12) **EUROPEAN PATENT APPLICATION**
published in accordance with Art. 158(3) EPC

(43) Date of publication:
**17.03.2004 Bulletin 2004/12**

(51) Int Cl.⁷: **H04B 3/54**, H04J 11/00, H04B 17/00

(21) Application number: **02732773.3**

(22) Date of filing: **23.05.2002**

(86) International application number:
**PCT/ES2002/000245**

(87) International publication number:
**WO 2002/095978 (28.11.2002 Gazette 2002/48)**

(84) Designated Contracting States:
**AT BE CH CY DE DK ES FI FR GB GR IE IT LI LU MC NL PT SE TR**
Designated Extension States:
**RO**

(30) Priority: **25.05.2001 ES 200101216**

(71) Applicant: **Diseno de Sistemas en Silicio S.A.
46980 Paterna (Valencia) (ES)**

(72) Inventors:
- **BLASCO CLARET, Jorge, Vicente
  E-46020 Valencia (ES)**
- **RIVEIRO INSUA, Juan, Carlos
  E-46019 Valencia (ES)**
- **FOUREN, Nils, Hakan
  E-08006 Barcelona (ES)**
- **JIMENEZ MARQUINA, Francisco, Javier
  E-46009 Valencia (ES)**

- **GOMEZ MARTINEZ, Feliciano
  E-46001 Valencia (ES)**
- **TORRES CANTON, Luis Manuel
  E-46025 Valencia (ES)**
- **GARCIA SAN JOSE, Aitor
  E-46019 Valencia (ES)**
- **BLASCO ABRIL, Francisco José
  E-46360 Bunol (Valencia) (ES)**
- **PARDO VIDAL, Carlos
  E-46019 Valencia (ES)**
- **BADENES CORELLA, Agustin
  E-12003 Catellón (ES)**
- **ARLANDIS MALONDA, Diego
  E-46780 Oliva (Valencia) (ES)**
- **RAMIRO MANZANO, Angel
  E-46360 Bunol (ES)**

(74) Representative: **Ungria Lopez, Javier et al
Avda. Ramon y Cajal, 78
28043 Madrid (ES)**

(54) **COMMUNICATION OPTIMISATION METHOD FOR A MULTI-USER OFDM DIGITAL TRANSMISSION SYSTEM USING THE ELECTRICAL NETWORK**

(57) The invention relates to a communication optimisation method for multi-user OFDM digital transmission systems using the electrical network. The receivers of the equipment (1, 2) monitor the quality of the communication and estimate the signal/noise ratio (S/N) of the uplink and downlink channel carriers. The user pieces of equipment (2) perform said surveillance independently of whether or not said equipment is the recipient of the transmission. The optimum transmission mode is selected using said surveillance consisting in modifying, packet by packet, the number of bits per carrier, the redundancy introduced by FEC generated error correction/detection codes, the actual FEC code and/or the transmission mode. In this way, the network can be divided up optimally in terms of frequency and time and the transmission capacity of the multiple pieces of user equipment can be maximised. The invention is suitable for point-to-multipoint bi-directional communication across the electrical network.

FIG. 1

EP 1 398 885 A1

**Description**

## TECHNICAL FIELD OF THE INVENTION

The present invention pertains to the telecommunications sector, in particular, it is applicable to two-way communication between a head-end and various user equipments when optimising transmission in the downstream channel, that is the channel that runs from the head-end equipment to the various user equipments, and to optimise transmission in the upstream channel which runs from the user equipments to the head-end, and furthermore, sharing the electricity network between the upstream and downstream channel by means of frequency division duplexing (FDD) and/or time division duplexing (TDD), so that multiple services may be offered to the users over the electricity network.

## OBJECTIVE OF THE INVENTION

The objective of this invention is the provision of a new process for optimum sharing of the electricity network at all moments in both time and frequency, both for the upstream and downstream channels, by continually monitoring the quality of communication in both the upstream and the downstream by means of estimating signal to noise (S/N) ratio in the individual carriers in said upstream and downstream channels.

In this invention the selection of the optimum transmission mode is carried out by monitoring done by modification, packet by packet, of the number of bits per carrier, the redundancy introduced by means of forward error correction/detection codes by a FEC that conventionally sends these, the FEC and /or the transmission mode, so that transmission capacity over the electricity distribution network for the multiple user equipments is maximized.

Furthermore, this invention foresees that transmission is optimised to the transmission characteristics of the electricity network, to multiple user equipments at the same time (multicast mode).

The invention has been specifically conceived to optimise communication in the upstream and downstream channel as described in Spanish patent submission n° 200003024 concerning a "system and process for the digital transmission of data, point to multipoint, over the electricity network".

## BACKGROUND OF THE INVENTION

As described in Spanish patent submission, N° 200003024, to be able to undertake optimum sharing of the electricity network in time and frequency at all moments and to maximize transmission capacity for multiple users on the electricity network, it is necessary to continually monitor channel characteristics in particular attenuation and phase-out between the various users and the head-end equipment and the various noises that affect the electricity network.

This system uses OFDM modulation with multiple carriers that are transmitted over the whole of the channel using very narrow bandwidth. The patent submission already mentioned does not describe the transmission optimisation process.

## DESCRIPTION OF THE INVENTION

This invention has developed a process that allows transmission optimisation in a system that comprises various user equipments and head-end equipment in two-way communication over the electricity network, and it is characterized in that it comprises:

- continual monitoring of communication quality by estimating signal to noise (S/N) ratio in the various carriers in the upstream and downstream channels, this estimation being undertaken by receptors in the head-end and user equipments respectively;
- monitoring the state of the network at each moment by the user equipments independent of whether or not the information is destined for the user;
- selection of the optimum transmission mode by monitoring carried out by the modification, packet by packet, of the number of bits per carrier, the redundancy introduced by means of the FEC, the FEC and /or the transmission mode.

These characteristics permit the process to carry out optimum sharing of the electricity network at all moments, in both time and frequency and maximize transmission capacity for the multiple user equipments over said electricity network.

Modifying the number of bits per carrier is the same as modifying the modulation used in each one of the carriers, or modifying the density of the constellation in the modulation. In this case transmission speed in increased.

Furthermore, the process in this invention comprises the characteristic that the head-end equipment may carry out transmission to multiple user equipments (multicast mode) taking advantage of the characteristics of the electricity network.

Estimation of the signal to noise (S/N) ratio in both the upstream and downstream channels, is carried out beginning from the error signal in the receptor demodulator, this being determined by the difference between the signal that enters the demodulator and the desired signal (the signal estimated to have been transmitted if the point of the constellation in each carrier had been situated in optimum position according to the possible points of the constellation used in this carrier); where S/N estimation, starting from the demodulation, is adequate if the erroneous bit rate (BER) is sufficiently low so as not to affect the process of estimation of the noise level.

Monitoring of communication quality in the upstream and downstream channels comprises the estimation of noise power (N) by means of the demodulator in both the user and head-end equipment, only in the carriers of the received signal where the modulation used is known, so as to obtain the value for noise power starting from an estimation of the mean squared value of noise beginning from the error signal in the demodulator and weighting the noise squared over a certain number of symbols so as to avoid that impulse noises or noises of short duration in the electricity network produce errors in the estimation of the noise power in reception

In monitoring the quality of communication in the upstream and downstream channels, the corresponding equipment estimates the power of the signal, selectively taking a normalized level in reception to compensate for the effects of the channel, where this level is previously established and known to any equipment by design, or by measuring the power of the received signal preferably having carried out an equalization process to compensate for the effects of the channel on signal transmission.

Equipments in both the upstream and downstream channels accumulate the error signal in the demodulator following demodulation of the received signal in the carriers where the receptors know the modulation used to carry out monitoring, preferably filtering the estimate to avoid oscillation in said estimation of noise power in the various carriers.

Therefore, calculation of the S/N is carried out selectively during windows (time periods) that last for M symbols, after accumulating error samples from the demodulation or during windows where at least P measures have been carrier out in all the carriers, so that the S/N calculation obtained is more reliable, where M and P are previously established values known by all the equipments, and so that undesired changes in communication optimisation are avoided.

In the case of transmission via the downstream channel, certain carriers within a group of carriers are sent with a pre-established, fixed modulation, known by all equipment, that preferably has low S/N requirements and whose position varies in time, symbol to symbol, within each group, so that following a certain number of symbols all the carriers in the group will have been forced to use the fixed modulation (grid) at some time; all of this so that the user equipment monitors communication quality even when the information sent by the head-end is directed to another user equipment, because it knows the modulation used to transmit the grid carriers.

When monitoring the upstream channel, the head-end only carries out estimations of the S/N for a certain user equipment while this is transmitting data in the upstream, so that when the head-end wants to update its estimate of S/N for a user equipment it selectively carries out one of the following actions:

   a. orders the user equipment to send specific information so that the head-end may measure the S/N and therefore monitoring is not blind because the receptor knows the information send by the transmitter.
   b. orders the user equipment to transmit the information that is wants to send and in this case, monitoring is blind because the head-end does not know the information sent by the user although it does know the modulation used by the carriers in the communication, which has been predefined by means of the communication between the head-end and the user equipments.

Estimating the S/N ratio in the various carriers received by the head-end equipment and previously sent by the corresponding user equipment carries out monitoring of the communication in the downstream channel.

As indicated earlier, transmission optimisation comprises the possibility to vary the mode of transmission of information, by monitoring the quality of the communication, which is carried out according to the following rules:

   -   If S/N is sufficiently high, modulations with greater density (with a larger number of bits per carrier) will be used, the number of points in the constellation being selected by means of comparing the S/N estimate with a series of theoretical S/N thresholds, along with variable FEC codes, that is to say forward error correction and/or detection codes with different protection capacities against errors, and all the while maintaining a determined bit error rate (BER). This form of transmission is called transmission in normal mode where different combinations of constellations, dense or less dense, that is to say with a greater number of points of the constellation when S/N is greater, along with variable FEC codes, that is forward error correction and/or detection codes with various modes for protection of data, maintaining a determined BER rata. This normal transmission mode allows communication optimisation to be carried out by using combinations of dense or less dense constellations and codes with high or low error correction/detection capability. Multiple combinations are possible such as using minimum FEC redundancy and constellations with few bits per carrier or FEC codes with large redundancy and more dense constellations.

- If S/N is very low, or if there is a need to send information to one or more users in a more secure form, then the same information is sent various times in various frequencies and /or times (transmission with diversity in HURTO mode (high ultra reliable transmission OFDM transmission).

As described previously, transmission optimisation is carried out based on the estimation of S/N in the various carriers, but it must be indicated that packet loss rate (PLR) is also taken into account, that is, the ratio of the number of packets correctly received among the total sent, the quality of service (QoS) required, and the size of the information to be sent with respect to the capacity of the OFDM symbols, adaptation being carried out packet by packet, according to these parameters, the FEC code and the redundancy introduced by this, the number of bits per carrier and/or the transmission mode (normal or HURTO mode), so that the number of bits per information packet along with redundancy approximates, without exceeding, a whole multiple of the number of bits that are transmitted in the OFDM symbol.

Furthermore, this invention foresees that in optimising transmission capacity:

- hysteresis margins are introduced both to increase and decrease the number of bits per carrier used starting from a comparison of the S/N with the S/N thresholds previously fixed, so as to maintain a determined BER and all of this so as to avoid the effects of oscillation when S/N reaches the threshold to change the number of bits;
- changes modulation only when the number of carriers that must change their modulation is greater than a previously established determined value;
- sends the decisions taken regarding the change of modulation in the carriers via the opposite channel to that used for the estimation, so that for the downstream channel the user equipment monitors the quality of the various carriers and in case it considers a change in modulation is necessary it informs the head-end, waiting for confirmation from the head-end before using the new modulation, while in the upstream an identical process is followed but it is the head-end that monitors and the user equipment that confirms the change in modulation. In both cases to send the decisions taken regarding a change in modulation of the carriers, a control channel or control messages are preferably used;

In a specific embodiment of the invention, transmission in HURTO mode is selected when estimated S/N is below a previously established value, where this value indicates that not even a modulation with low S/N requirements along with FEC codes that introduce great redundancy can be used with the guarantee of obtaining a determined BER on exiting the FEC, or when wanting to send information to one or more user equipments with a high probability that they will receive this information correctly, for example, in the case of control messages, then this transmission mode is preferable.

The transmission of information in HURTO mode comprises sending all carriers used with a modulation that has low S/N demodulation needs, as well as using forward error correction FEC codes that introduce sufficient redundancy to correct and or detect in reception a large number of errors produced by transmission over the electricity network. The modulation with low S/N requirements that is used by preference is QPSK modulation.

When transmitting in HURTO mode, the number of times information is repeated, that is to say, the level of diversity used, is modified, packet by packet, starting from the estimated characteristics of the electricity network, where the equipment receives the same information the same number of times as diversity has been selected in HURTO mode. In this case, a process of combining the various received signals to estimate the information really sent is carried out.

In one embodiment of the invention, the process of combining the various signals received so as to estimate the information really send in HURTO mode comprises selectively carrying out the coherent sum of the received signal in diversity and multiplying these by a coefficient based on the S/N of the carriers from which the information was received before demodulation (maximum rate combiner) or demodulate the information that arrives in diversity independently and carryout a weighted voting according to the demodulation error signal.

Only in the case where diversity in frequency is used before carrying out the combination process or voting, groups of carriers may be selected depending on estimated S/N distribution, or all of these may be used to optimise the method of estimating the information received in diversity.

In the case where multiple impulse noises exists in the electricity network, redundancy introduced by the FEC is dynamically modified to maintain an error rate without altering modulation and codes with a greater capacity for error correction are used when there is more noise affecting the transmission.

Furthermore, the invention foresee the use of constellations denser than those acceptable to maintain a determined BER with a determined S/N and for which FEC is adapted so as to introduce greater redundancy, sufficient to maintain said BER in reception, and achieving improvements in transmission capacity on using denser constellation while maintaining a determined error rate.

In either case, FEC adaptation is carried out packet by packet to offer different qualities of service (QoS), and all of this so as to indicate to the other extreme the current configuration of the FEC by means of headers used in the packets, said adaptation of the FEC consisting of altering the redundancy generated by the FEC on the signal, on altering the FEC code used to make the signal avoid noise on the line, or on altering both aspects.

In one embodiment of the process in this invention, various combinations of bits per carrier, redundancy, FEC codes, transmission mode, and diversity are selected and these combinations are stored in the user and head-end equipment in a series of tables. These combinations are selected to offer various qualities of service in the communication for example, maximizing transmission, minimizing latency, etc. In this case, starting from the estimation carried out and various parameters previously described, PLR, length etc., a combination is selected, packet by packet, indicating the combination of parameters selected by means of a reference, preferable to a position in the table, that is sent in the message headers. Therefore, in function of the quality required and the S/N estimation carried out, a determined position on the table is acceded to where the various parameters to be used are indicated such as number of bits, FEC, etc.

In case the head-end wants to send the same information to a group of user equipments or to all the users in the system, it uses, selectively:

- transmission in HURTO mode;
- constellations modulated with the maximum number of bits per carrier that can be used, provided that all the user equipments in the group will be capable of demodulating this maximum number of bits per carrier maintaining a determined BER;
- dense constellation, but adding sufficient redundancy in the FEC codes so that all the users in the group will be capable of recuperating the information sent.

In the second supposition, the user equipment in the group with the least number of bits per carrier limits the constellation density that can be used in transmission in this carrier unless redundancy included in the signal is increased, where the values of bits per carrier are known by the head-end equipment and where the head-end indicates the number of bits per carrier used in each carrier by means of message headers that are sent to the group of user equipments. Furthermore, the headers also informs if one or more users belonging to the group must demodulate the messages sent, that is to say, they inform on the dynamic re-assignation of the user groups.

Therefore, by means of the process in this invention the transmission of information is optimised at all moments depending on channel conditions and the quality required for the transmission.

The following single drawing is provided to facilitate a better understanding of the present invention and while forming an integral part of the detailed description and the claims, they offer an illustrative but not limited representation of the principles of this invention.

## BRIEF DESCRIPTION OF THE DRAWINGS

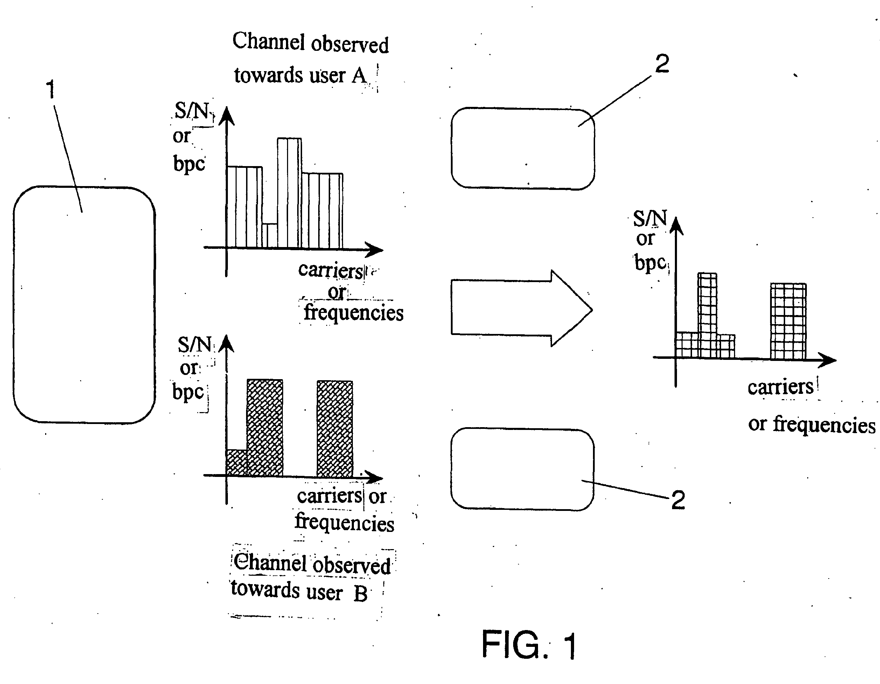

**Figure 1.** Shows an example of a means of sending information to multiple users, where the head-end selects the least number of bits per carrier in each one of the carriers to guarantee that all user equipment to which the information is directed will be capable of receiving it.

## DESCRIPTION OF A PREFERRED EMBODIMENT OF THE INVENTION

As has been mentioned, this invention is applicable to those systems in which a head-end equipment **1** is in two-way communication over the electricity network with a number of user equipments **2** sharing the upstream and downstream channels by means of frequency division duplexing and/or time division duplexing, transmitting a signal with OFDM (orthogonal frequency division multiplexing), with multiple carriers with different modulation and with forward error correction/detection codes FEC and using very narrow bandwidths.

The process in this invention comprises the continual monitoring of the quality of the communication whereby the receptors in the head-end equipment **1** and the user equipments **2** estimate the signal to noise (S/N) ratio in the various carriers in both the upstream and downstream channels.

Monitoring by the user equipments is carried out at any moment regardless of whether or not they are the destination of the information, as previously described, which is a great advantage, because the state of the channel is monitored at all moments without the need to send information to each of the users.

Furthermore, the process in this invention comprises the selection of optimum transmission mode beginning from the monitoring of S/N carried out, by means of modifying the number of bits per carrier, by the redundancy introduced in the information by the FEC, by the FEC code itself and/ or by the transmission mode, said selection being carried out in all received carriers.

Therefore, channel monitoring consists of continual estimation of the S/N in the different received carriers and due to the fact that the bandwidths used in the communication are narrow, it can be assumed that the response in these bandwidths is flat, so that the estimation of the S/N can be easily carried out, from the error signal in the demodulator of the receptor. This error signal is the difference in the signal that arrives at the receptor at this moment and the desired signal (which is the signal that is estimated that should arrive, if the point of the constellation would be in optimum position according to the possible points of the constellation used in this carrier). This error signal is a good estimate of the level of noise with respect to the signal obtained in the receptor.

In the transmitted signal, power signal level is standardized, for example with S=0,5. The level of noise power (N) may be estimated by the mean-squared error $E_n$, defined mathematically to be the expected operation of the product of the noise signal in the current sample by the conjugated noise signal in the current sample, so that it can be proved that:

$$E_n = E\{n[k]n^*[k]\}$$

$$SNR = \frac{S}{N} = \frac{0.5}{E_n}$$

The receptor demodulator compensates for the effect of the channel on the received signal, and on its exit, the difference between the received signal and the signal that it is estimated should arrive, is calculated, that is to say, the error signal is obtained.

To carry out this function the demodulator used may be coherent or differential, because it is possible with either of these two configurations to obtain signal error that can be used to estimate the S/N. One possible implementation of this demodulation could be equalization with an algorithm conventionally used in the state of the art, such as LMS, RLS etc.

It is possible that various user equipments use the channel in the same OFDM symbol in different frequencies, so that it will not be possible to carry out an estimation of the S/N in all carriers, but rather only in the carrier used by each one of the user equipments. This is not damage the process since the monitoring/adaptation process is carried out carrier by carrier for both communication channels, as previously mentioned.

The value of S/N obtained according to the previous equation, is an estimate that approximated the real value of the signal-to-noise ratio when S/N is sufficiently high. This brings greater precision when it comes to deciding on the use of denser constellations in the modulation, which need greater S/N for their correct demodulation, and therefore provide greater precision when the process is deciding an increase in transmission capacity over the electricity network.

As indicated previously, the user are capable of carrying out the monitoring even though they may not be the destination of the information, so that, on transmission, the head-end sends a grid, that consists of dividing the carriers of the symbols into groups of carriers, following the synchronisation sequence conventionally used, and within each group, they divide into groups of carriers with a fixed modulation that have low S/N needs for demodulation. These carriers change their position within each group symbol by symbol, so that, following a certain number of symbols, all the carriers in a group will have been forced at one time to use the fixed modulation, and therefore, any user equipment may carry out the S/N estimation on the grid carriers, because it knows the modulation used. Therefore, in the case where the information is destined for another user, the user equipment, that is not the destination of the information, may carry out monitoring only on the grid carriers, in which the error signal in the demodulator in reception is obtained.

In one real example, the grid carriers are modulated in QPSK, which is a modulation with low S/N needs, that is to say the probability of its correct detection in reception is very high.

In either case, that is to say, when the information is directed to the user equipment as well as when it is not, a weighting of noise during a certain number of frames is carried out so as to avoid that impulse noises or noises of short duration on the electricity network produce errors in reception. To calculate noise, an estimation of the average is used from the mean-squared error obtained in the demodulator in the receptor.

From the noise calculation the S/N is calculated in the form previously indicated.

With respect to monitoring in the upstream, the head-end is responsible for monitoring line quality, while the user equipments transmit. The head-end equipment, as has mentioned previously, can only measure S/N for a given user equipment while this user is transmitting in the upstream channel. Therefore, when the head-end equipment wishes to refresh its S/N estimation for user equipment it carriers out one of the following operations:

-    orders the user equipment to send specific information so that the head-end may measure the S/N. In this case, the monitoring is not blind because the receptor knows the information sent by the transmitter;

- orders the user equipment to transmit the information it desires. In this case, monitoring is blind because the receptor does not know the information sent although it does know the modulation used.

In this case the estimation of S/N in the carriers in the upstream channel is carried out by obtaining the noise from the square of the signal error, and starting from the noise, S/N is estimated in the same way as previously indicated for the downstream channel.

On the other hand, in monitoring in the downstream channel, when the user is the destination of the information sent by the head-end, the information received is used in all carriers to carry out the estimation of S/N with the error signal in the demodulator, because the user knows the constellation employed in each one of the carriers, as this was previously negotiated with the head-end equipment, as carried out conventionally.

In the grid carriers, it is not necessary to send fixed information, because the receptors can carry out monitoring in blind mode, that is to say, without knowing a priori the information sent due to the fact that any user equipment knows the position of the grid carriers and may demodulate the information because in these carriers the modulation used is fixed by system design. Therefore, the demodulation error signal serves to estimate the S/N in the grid carriers.

If, at any time, secure communication is required, such as for example occurs with control signals, or when the monitoring carried out shows that not even a modulation with low S/N along with FEC codes that introduce great redundancy will bring guarantees of maintaining a determined BER, the system changes the mode of transmission from normal mode to HURTO mode (high ultra reliable transmission OFDM).

This transmission mode consists of carrying out transmission in the communications channel with frequency and/or time diversity, that is, the same information is sent various times in different frequencies and /or moments of time, and furthermore, with all the carriers used in the modulation having low S/N requirements for their demodulation, such as for example QPSK, and forward error detection/correction codes (introduced by the FEC) that introduce sufficient redundancy to correct and/or detect in reception a large number of errors produces by the transmission over the electricity network. Therefore, the receptor receives the same information various times which increases the probability that the message sent would be correctly decoded.

The number of times that information is repeated, that is the degree of diversity used, is modified from the estimated characteristics of the electricity network. This factor may be modified packet by packet. The possibility exists that the equipment can have defined configurations, for example in a table, and by protocol one or other configuration with a different degree of diversity is indicated. This indication is carried out by preference with the message headers.

In one embodiment of the invention, a diversity of 8 with 512 carriers in total is used, and only diversity in frequency; in this case the information is sent in the carriers k, k+64, k+128, etc., modulated in QPSK.

As a consequence, the user receives the same information the same number of times as diversity has been selected in HURTO mode. The possibility of errors in the information received exists due to transmission over the electricity network, and for which the user equipment will have to decide which information has been really transmitted. There are various means of taking this decision, for example:

- Select from the different times the same information arrived which was transmitted using the carriers with the greatest S/N (selecting the maximum S/N).
- Coherently add the signals received that carry the same information after multiplying them by a weight based in the S/N of the carriers where the signal was transmitted and demodulate the resulting wave form (maximum rate combiner).

Having monitored the quality of the communication, the process of this invention selects the optimum form of communication according to the following possibilities:

- If S/N is sufficiently high, denser modulations are used (with a greater number of points in the constellation when S/N is higher) along with variable FEC codes, that is, forward error correction and/or detection codes with different modes of data protection, to increase the transmission of information to the maximum while maintaining a determined BER. The possibility for multiple combinations exists, such as using a redundancy of minimum FEC and constellations with few bits per carrier, or using codes with large redundancy and using denser constellations (with more bits per carrier).
- If S/N is very low, or if we desire to transmit to one or more users in a more secure form, then the information is sent with diversity in frequency and /or time thanks to the transmission in HURTO mode as previously described.

Therefore, optimising transmission in the invention brings about an adaptation in transmission capacity. From the theoretical point of view, transmission capacity for whatever communication channel is limited by channel bandwidth and the value of the signal to noise ratio in this channel.

With the Shannon formula, the theoretical limit of this capacity is obtained:

$$C = W.\log_2\left(1 + \frac{P}{WN_0}\right) = W.\log_2(1 + SNR)$$

where W is the channel bandwidth, P the power used, $N_0$ the noise density and SNR the signal-to-noise ratio (S/N).

This theoretical transmission capacity is greater than that which can be achieved using the usual codification and de-codification algorithms for the transmission of information, but from the previous mathematical expression a criteria can be separated obtained for optimising transmission: with greater S/N values one can used the channel to transmit more information, which justifies the statements made previously in this description.

Starting from the estimation of the quality of the channel, the system modifies the transmission mode in an adaptive form, with the objective of reaching maximum transmission capacity while this continues to be secure. In one implementation of the invention, if constellations m-QAM are used modification of the transmission mode will consist in modifying the "m" with m∈{0,2,4,8,16,32,64..... , beginning from the estimations of quality.

Adaptation of transmission capacity is carried out packet by packet from the S/N estimate in the various carriers, from the packet loss rate (PLR), from the quality of service (QoS) required and from the size of the information to be sent, deciding from these parameters the FEC code and the redundancy that this should introduce, as well as the number of bits per carrier and the transmission mode (normal mode or HURTO mode).

All this process is carried out according to secure transmission criteria that in one embodiment of the invention consists of maintaining a determined bit error rate among the total received (BER), or in another embodiments consists in maintaining a determined ratio of packets received with some erroneous FEC blocks among the total received (PLR).

The error rate that can be allowed depends on the quality of service that the system is offering for a specific application at this moment.

In what follows, some concepts regarding the error rates in a communications system are introduced to facilitate understanding of the criteria used in this invention. These concepts are:

- Rough bit error rate (RBER) that is the number of erroneous bits in terms of the total on leaving the demodulator.
- FEC block error rate (FER,) that is the number of blocks (FEC) that have not been corrected (in terms of the total).
- Packet loss rate (PLR) that is the number of packets received that contain one or more erroneous FEC blocks.

The PLR is variable, but its value if known for a determined quality of service. Therefore, for example, in one implementation a PLR=$10^4$ is considered so that transmission over the channel will have guarantees of acceptable quality.

The previous parameters may be related among themselves in mathematical form. Therefore, for example, using Reed-Solomon codes in the FEC, one obtains:

$$p_b = RBER$$

$$p_B = 1-(1-p_b)^8$$

$$p_F = 1 - \sum_{k=0}^{t} \binom{N}{k} p_B{}^k (1 - p_B)^{N-J}$$

$$FER = P_F$$

where $p_b$ is the rough error rate per bit, $p_B$ the rough error rate per byte, $p_F$ the error rate of the FEC blocks, t the maximum number of erroneous bytes that may be corrected by the error correction/detection codes, and N the number of bytes after adding the redundancy by means of the FEC.

Furthermore, the packet loss rate (PLR) and the FEC blocks error rate (FER) are directly related by the following equation:

$$PLR = 1-1(1-FER)^m$$

where m is the average number of FEC blocks in the data packet. For example, for packets of data of 1518 bytes, if the Reed-Solomon codes used are (252, 232), the average number of blocks per packets will be of 6, 5431, approximately =7.

Starting from the previous relations the value selected for PLR gives rise to a maximum value for RBER on leaving the demodulator.

For example, if. PLR=10-4 is specified:

$$FER = 1 - \sqrt[m]{1 - PLR} = 1 - \sqrt[7]{1 - 10^{-4}} = 1.4286.10^{-5}$$

And to maintain this FER value it is necessary that $P_B$=8,556x10$^{-3}$; which is equivalent to $P_b$=1,07347x10$^{-3}$.

It is possible to relate the probability of one erroneous symbol with the S/N of the carrier in the modulation. Therefore, in one embodiment of the invention, if a rectangular constellation with m-QAM with m=2$^k$ is used, where k is even, the QAM constellation may be divided into two PAM modulations in quadrature, and the probability of taking the correct decision on the point of the constellation is determined by:

$$P_c=(1-P_{\sqrt{M}})^2$$

$$P_{\sqrt{M}} = 2\left(1 - \frac{1}{\sqrt{M}}\right)Q\left(\sqrt{\frac{3}{M-1}}\left(\frac{S}{N}\right)\right)$$

Where Q(x) is the mathematical function used to calculate the area below the tail of the gaussian probability density function, the definition of which is:

$$Q(x) = \frac{1}{\sqrt{2\pi}}\int_x^\infty e^{-t^2/2}dt, x \geq 0$$

And that it is related to the complementary error function, ERFC (usually used in statistics) as:

$$Q(x) = \frac{1}{2}erfc\left(\frac{x}{\sqrt{2}}\right)$$

Where, furthermore, $P_c$ is the probability of taking the correct decision in reception in a QAM system with M constellation points, and $P_{\sqrt{M}}$ is the probability of error in a PAM system with $\sqrt{M}$ points that has half the average power in each signal in quadrature than the equivalent QAM system.

Evidently, with other types of constellations one can discover similar or even graphic relations between the probability of taking a correct decision in reception and the value of S/N.

Using the formulae described previously one may obtain a series of S/N thresholds sufficient to achieve a value for $p_b$. The thresholds depend of the correction/detection codes used.

Starting from these thresholds one may use a determined number of bit per carrier (bpc) and therefore modify the modulation having carried out the estimation of S/N in the carrier in question.

In one embodiment of the invention, with variable QAM modulation of 2, 4 6, and 8 bits per carrier, and a FEC that uses Reed-Solomon codes (252, 232) and (40,20), the following thresholds of S/N are obtained by following the reasoning described previously, and beginning from which the next modulations may be used:

| Reed-Solomon Codes (252, 232) | | |
|---|---|---|
| Nominal Threshold | Bits per Carrier (bpc) | Modulation |
| 9.7396 dB | 2 | 4-QAM |
| 16.479 dB | 4 | 16-QAM |
| 22.482 dB | 6 | 64-QAM |
| 28.343 dB | 8 | 256-QAM |

| Reed-Solomon Codes (40,20) | | |
|---|---|---|
| Nominal Threshold | Bits per carrier (bpc) | Modulation |
| 8.020 dB | 2 | 4-QAM |
| 14.642 dB | 4 | 16-QAM |
| 20.529 dB | 6 | 64-QAM |
| 26.279 dB | 8 | 256-QAM |

This same reasoning may be used to offer different qualities of services, that are translated into distinct PLR values. For each of the qualities of service, and for each type of correction/detection code chosen, a distinct RBER value is found and beginning from these values the S/N threshold is obtained from which a new modulation may be used.

For example, if in an implementation of the invention three different qualities of service are defined by their packet loss rate:

| Quality of Service | Rate of packet loss |
|---|---|
| QoS-1 | $10^{-2}$ |
| QoS-2 | $10^{-3}$ |
| QoS-3 | $10^{-4}$ |

Therefore, the RBER values from which the VER thresholds are obtained are the following:

| | QoS-1 | QoS-2 | QoS-3 |
|---|---|---|---|
| **RS (252,232)** | $1.85 \times 10^{-3}$ | $1.35 \times 10^{-3}$ | $1.07 \times 10^{-3}$ |
| **RS (40, 20)** | $9.7 \times 10^{-3}$ | $7.5 \times 10^{-3}$ | $5.87 \times 10^{-3}$ |

The size of the information to send may also be used to optimize communication, as mentioned earlier. The number of bit in the information packet, along with the redundancy, must be approximate, without exceeding, a whole multiple of the number of bits that are transmitted in an OFDM symbol. Comparing the size of the information and the nearest multiple (of the number of transmittable bits by OFDM symbol), one can conclude if one is able to send more information of redundancy and how much. This information of redundancy increases the probability to obtain the correct information in reception, which indirectly increases the capacity to transmit information.

The number of bits per carrier and the other information regarding the form in which the information will be send may be negotiated packet by packet, as indicated previously.

It is therefore possible to use tables with fixed configurations known by both the head-end and user equipment and depending on the results of the adaptation algorithm the use of one or other mode is negotiated by protocol. In one preferred embodiment of the invention, the message headers are used to indicate the use of a determined position in the table of configurations.

Therefore, to adapt transmission capacity, multiple combinations of bits per carrier and redundancy by the FEC codes may be used, always with the objective of maintaining a determined BER.

As a result and by means of this invention, the estimated S/N value is used to calculate a combination of its per carrier, codes and redundancy introduced by the FEC to maintain a determine RBER, optimizing the transmission capacity, as described previously. The decision thresholds presented previously indicate the modulation that should be selected while using a determined FEC even though it is also possible to use FEC codes that provide greater protection against errors and apply modulations with a greater number of bits that those recommended by the thresholds, obtaining, if the redundancy introduced is sufficient, similar RBER values.

Any change calculated in the user equipment must be communicated to the head-end using part of the upstream channel for this, so that while the head-end does not inform the user equipment that it has changed the constellation used in the modulation in the carriers indicated, the user kit does not update the form of demodulation of the received signal in these carriers. In the upstream channel, a similar process is carried out, although in this case it is the head-end that determines the change of modulation and awaits confirmation on the part of the user implicated.

To avoid the effects of oscillation when S/N approaches a threshold, and so that transmission capacity for the communication is not lost, because any change calculated by the user equipment must be communicated to the head-end equipment using part of the upstream channel, which in these moments may be used to transmit the information and vice a versa, some histeresis margins are introduced to both increase and decrease the number of bits per carrier.

In one embodiment of the invention, for the case of RBER=$1,07 \times 10^{-3}$, a fixed FEC RS(252, 232) and modulation QAM with 2, 4, 6, 8 bits per carrier, a table of thresholds is used as the following example:

| Nominal threshold | Downward threshold | Upward threshold | Bits per carrier | Modulation |
|---|---|---|---|---|
| 9.6 dB | 8.6dB | 11.6dB | 2 | 4-QAM |
| 16.6 dB | 15.5 dB | 18.5 dB | 4 | 16-QAM |
| 22.5 dB | 21.5 dB | 24.5dB | 6 | 64-QAM |
| 28.5 dB | 27.5 dB | 30.5 dB | 8 | 256-QAM |

For example, if in a carrier 16-QAM modulation is used, then to increase the number of bits to a modulation 64-QAM, it is necessary that the estimated S/N be greater than 25.4 dB, while to decrease the number of bit to a modulation 4-QAM, it is necessary that estimated S/N be less than 15,5 dB.

A change in the modulation is only carried out when various carriers must change modulation. Therefore, the carriers may be grouped in blocks, and it is only when a determined number of carriers in a block need to change modulation that this necessity is communicated to the other extreme of the communication. The decision taken regarding the change of modulation in the carriers are sent by the opposite channel to that which carried out the estimate.

For this a control channel is used, preferably by means of sending control messages to inform of this change at the other extreme.

To update the S/N measurements with greater speed, the possibility exist to assume that the S/N in two adjacent carrier (k and k+1) is equal, This process may be repeated with multiple carriers, but resolution in frequency is worse the greater the number of carriers assumed to have identical S/N.

As described previously, starting from the monitoring of line quality, optimum communication form is decided, which is selected with the objective of maximizing transmission capacity while maintaining a determined BER at the FEC output.

This, as described previously, may be carried out in various forms: altering the number of bits per carrier (that is the constellation used in each carrier), the redundancy introduced to carry out correction/detection of errors in reception and even the FEC code used to generate redundancy on the signal. For example, it is possible to send carriers with less dense constellations ( with a low number of bits per carrier) and with FEC codes that introduce little redundancy, or constellation that are more dense but using FEC codes with greater redundancy to avoid possible errors in reception.

The biggest problem with transmission over the electricity network is that noise on the line is not stationary, that is to say it does not only present white gaussian noise, but rather, it is also affected by other noises such as impulse noises or noises that are multiples of the fundamental frequency of electricity distribution, that is, 50Hz to 60 Hz in networks such as those in North America.

By dynamically modifying redundancy introduced by the FEC one can maintain error rate without the need to alter modulation (number of bits assigned to each carrier), correcting more errors when there is more noise affecting the transmission.

On the other hand, denser constellations may be used (which transmit at greater speed) adapting the FEC to introduce more redundancy, so that a determined BER is maintained in reception while at the same time improving transmission capacity.

FEC adaptation can be carried out packet by packet as previously indicated, so that the current configuration is indicated at the other extreme of the FEC (code and redundancy) by means of the headers used in the packets. FEC adaptation not only consists of altering the redundancy generated by the FEC on the signal, it also consists of the possibility of altering the FEC code used to adapt to line noise. For example, the Reed-Solomon codes are adequate in case of impulse noises while the convolutional codes are adequate when background noise on the line is principally responsible for deterioration in communication.

As indicated previously, when the head-end equipment wants to send the same information to a group of users, or to all the users in the system, it may transmit in HURTO mode , as described previously, but furthermore, it may use constellations that have been modulated with the maximum number of bits per carrier allowed provided that all the users will be capable of adequately demodulating, maintaining a determined BER.

Furthermore, the possibility exists for the head-end equipment to apply denser constellations, but adding sufficient redundancy of correction/detection of errors so that all the users in the group will be able to adequately recuperate the information sent.

The head-end equipment knows the number of bits per carrier that it has to use to transmit information in the downstream channel to each one of the users on the basis of that description herein. Within a group, the user with the least number of bits per carrier is the one that limits the density of the constellation in this carrier unless the redundancy included in the signal is increased. In this case the information on the number of bits per carrier used in each carrier is indicated by means of the message headers that are sent to the group of users.

Figure 1 shows an example of this means of sending the information to multiple user equipments **2**, where it can be observe that the head-end **1** selects the least number of bits per carrier (bpc) in each one of the carrier to have the guarantee that all the users in the group will be capable of obtaining the information.

The head-end dynamically reassigns the groups of user equipments, that is, the components of each group are not fixed, and the group or groups that have to demodulate the messages, and to which the messages belong, is indicated in the message headers.

**Claims**

1.  **PROCESS TO OPTIMISE COMMUNICATION FOR A MULTI USER OFDM DIGITAL TRANSMISSION SYSTEM OVER THE ELECTRICITY NETWORK,** with various user equipments (2) and a head-end equipment (1) in two-way communication over the electricity network, and where transmission optimisation occurs in the both the upstream channel defined as the channel running from the user equipments to the head-end equipment, as well as the downstream channel, defined as the channel running from the head-end to the user equipment; and where furthermore, sharing of the electricity network in both the upstream and downstream channels occurs by means of frequency division duplexing (FDD) and/or time division duplexing (TDD); and where a signal with OFDM modulation (orthogonal frequency division multiplexing) is transmitted with multiple carriers, with different modulation and with forward error correction/detection codes sent over the whole channel using very narrow bandwidths, and **characterized in that** it comprises:

    -   continual monitoring of communication quality by estimating signal to noise (S/N) ratio in the various carriers in the upstream and downstream channels, this estimation being undertaken by receptors in the head-end and user equipments respectively;
    -   monitoring the state of the network at each moment by the user equipments independent of whether or not the information is destined for the user;
    -   selection of the optimum transmission mode by the monitoring done by the modification carried out, packet by packet, of the number of bits per carrier, the redundancy introduced by means of the FEC, the FEC and / or the transmission mode, and all of this so as to be able to carry out optimum sharing of the network at all moments, in both time and frequency and so that transmission capacity over the electricity distribution network for the multiple user equipments is maximized.

2.  **PROCESS TO OPTIMISE COMMUNICATION FOR A MULTI-USER OFDM DIGITAL TRANSMISSION SYSTEM OVER THE ELECTRICITY NETWORK,** according to Claim 1, **characterized in that** estimation of the signal to noise (S/N) ratio is carried out beginning from the error signal in the receptor demodulator, this being determined by the difference between the signal that enters the receptor demodulator and the desired signal, that is, the signal estimated to have been transmitted if the point of the constellation in each carrier had been situated in optimum position according to the possible points of the constellation used in this carrier; where S/N estimation, from the demodulation, is adequate if the bit error rate (BER) is sufficiently low so as not to affect the process of estimating the noise level.

3.  **PROCESS TO OPTIMISE COMMUNICATION FOR A MULTI-USER OFDM DIGITAL TRANSMISSION SYSTEM OVER THE ELECTRICITY NETWORK**, according to Claim 2, **characterized in that** monitoring of communication quality in the upstream and downstream channels comprises the estimation of noise power (N) by means of the demodulator of both the user and head-end equipment only in the carriers of the received signal where the modulation used is known and, the value for noise power is obtained from an estimation of the mean squared value for noise beginning from the error signal in the demodulator and weighting the noise squared over a certain number of symbols so as to avoid that impulse noises or noises of short duration in the electricity network produce errors in the estimation of the noise power in reception.

4.  **PROCESS TO OPTIMISE COMMUNICATION FOR A MULTI-USER OFDM DIGITAL TRANSMISSION SYSTEM OVER THE ELECTRICITY NETWORK,** according to Claim 2, **characterized in that** when monitoring communication quality in the upstream and downstream channels, the user equipments and the head-end estimate the power of the signal (S) selectively, using a normal level in reception that compensates for the effects of the channel, to represent signal power, where this level is previously established and known by design, or by measuring the power of the received signal, preferably having carried out the equalization process so as to compensate for the effects of the channel on the transmission signal.

5.  **PROCESS TO OPTIMISE COMMUNICATION FOR A MULTI-USER OFDM DIGITAL TRANSMISSION SYSTEM OVER THE ELECTRICITY NETWORK,** according to Claim 4, **characterized in that** the error signal of the demodulator is accumulated following demodulation of the received signal in the carriers where the modulation used is known, preferably having firstly filtered the estimate of noise power in the various carriers so as to avoid oscillation in said estimation.

6.  **PROCESS TO OPTIMISE COMMUNICATION FOR A MULTI-USER OFDM DIGITAL TRANSMISSION SYSTEM OVER THE ELECTRICITY NETWORK,** according to Claim 5, **characterized in that** calculation of the S/N is carried out after having accumulated samples of demodulation error selectively during windows, that is, time periods, that last for M symbols or during windows where at least P measures have been carried out in all the carriers, where M and P are previously established values known by all the equipments.

7.  **PROCESS TO OPTIMISE COMMUNICATION FOR A MULTI-USER OFDM DIGITAL TRANSMISSION SYSTEM OVER THE ELECTRICITY NETWORK,** according to Claim 5, **characterized in that** in transmission via the downstream channel certain carriers are sent that have a pre-established, fixed modulation, known to all equipment, that preferably has low S/N requirements and whose position varies in time, namely, grid, so that the user equipment, knowing the modulation used to transmit the grid carriers, monitors communication quality including when the information sent by the head-end is directed to another user equipment, and furthermore, the process comprises the accumulation of noise samples, even when the user is not the destination for the transmission.

8.  **PROCESS TO OPTIMISE COMMUNICATION FOR A MULTI-USER OFDM DIGITAL TRANSMISSION SYSTEM OVER THE ELECTRICITY NETWORK,** according to Claims 2 to 6, **characterized in that** when monitoring the upstream channel, the head-end only carries out estimations of the S/N for a certain user equipment while this is transmitting data in the upstream, so that when the head-end wants to update its estimate of S/N for a user equipment it selectively carries out one of the following actions:

    -   orders the user equipment to send specific information so that the head-end may measure the S/N and therefore monitoring is not blind because the receptor knows the information sent by the transmitter;
    -   orders the user equipment to transmit the information that is wants to send and in this case, monitoring is blind because the receptor does not know the information sent although it does know the modulation used for its transmission.

9.  **PROCESS TO OPTIMISE COMMUNICATION FOR A MULTI-USER OFDM DIGITAL TRANSMISSION SYSTEM OVER THE ELECTRICITY NETWORK,** according to Claim 8, **characterized in that** monitoring of the communication in the downstream channel is carried out by means of estimating the S/N ratio in the various carriers received by the head-end equipment.

10. **PROCESS TO OPTIMISE COMMUNICATION FOR A MULTI-USER OFDM DIGITAL TRANSMISSION SYSTEM OVER THE ELECTRICITY NETWORK,** according to the previous Claims, **characterized in that** the election of optimum transmission mode is selected starting from the monitoring of communication quality and according to the rules:

- If S/N is sufficiently high modulations with greater density, namely, with a larger number of bits per carrier, will be used, the number of points in the constellation being selected by means of comparing the S/N estimate with a series of previously defined S/N thresholds, along with variable FEC codes to increase the transmission of information to the maximum, all the while maintaining a determined bit error rate (BER);
- If S/N is very low, or if there is a need to send information to one or more users in a more secure form, then the same information is sent various times in various frequencies and /or times, that is, transmission with diversity in HURTO mode, namely, high ultra reliable transmission OFDM.

11. **PROCESS TO OPTIMISE COMMUNICATION FOR A MULTI-USER OFDM DIGITAL TRANSMISSION SYSTEM OVER THE ELECTRICITY NETWORK,** according to Claim 10, **characterized in that** starting from S/N in the various carriers, from the packet loss rate (PLR), from the quality of service (QoS) required, and from the size of the information to be sent with respect to the capacity of the OFDM symbols, the FEC code, the redundancy is introduced by the FEC code, the number of bits per carrier, namely, the constellation used in each carrier, and the transmission mode, namely, normal or HURTO mode, are adapted so that the number of bits per information packet along with redundancy approximates, without exceeding, a whole multiple of the number of bits that are transmitted in the OFDM symbol.

12. **PROCESS TO OPTIMISE COMMUNICATION FOR A MULTI-USER OFDM DIGITAL TRANSMISSION SYSTEM OVER THE ELECTRICITY NETWORK**, according to Claim 11, **characterized in that** in adapting transmission capacity, the following occurs:

- hysteresis margins to both increment and decrease the number of bits per carrier from the comparison of the S/N with the previously fixed S/N thresholds needed to maintain a determined BER, are introduced and all of this so as to avoid the effects of oscillation when S/N reaches a threshold;
- changes modulation only when the number of carriers that must change their modulation is greater than a previously established determined value;
- sends the decisions taken regarding the change of modulation in the carriers via the opposite channel to that used for the estimation and preferably using a control channel or control messages;
- awaits confirmation that the indication of having changed the modulation in the carriers has been received before using this new modulation.

13. **PROCESS TO OPTIMISE COMMUNICATION FOR A MULTI-USER OFDM DIGITAL TRANSMISSION SYSTEM OVER THE ELECTRICITY NETWORK**, according to Claim 10, **characterized in that** transmission in HURTO mode is selected when estimated S/N is below a previously established value, where this value indicates that not even a modulation with low S/N requirements along with FEC codes that introduce great redundancy can be used with the guarantee of obtaining a determined BER on exiting the FEC, or when wanting to send information to one or more user equipments with a high probability that they receive this information correctly, such as in the case of control messages, then this transmission mode is preferable.

14. **PROCESS TO OPTIMISE COMMUNICATION FOR A MULTI-USER OFDM DIGITAL TRANSMISSION SYSTEM OVER THE ELECTRICITY NETWORK**, according to Claim 13, **characterized in that** transmission of information in HURTO mode comprises sending all carriers used with a modulation that has low S/N demodulation needs, preferably QPSK modulation, as well as using forward error correction FEC codes that introduce redundancy sufficient to correct and or detect in reception a large number of errors produced by transmission over the electricity network.

15. **PROCESS TO OPTIMISE COMMUNICATION FOR A MULTI-USER OFDM DIGITAL TRANSMISSION SYSTEM OVER THE ELECTRICITY NETWORK,** according to Claim 14, **characterized in that** in HURTO mode, the number of times the information is repeated, namely, level of diversity used, is modified from the estimated characteristics of the electricity network, and this modification is done packet by packet; where the equipment receives the same information the same number of times as diversity has been selected in HURTO mode, and carries out a process of combining the various received signals to estimate the information really sent.

16. **PROCESS TO OPTIMISE COMMUNICATION FOR A MULTI-USER OFDM DIGITAL TRANSMISSION SYSTEM OVER THE ELECTRICITY NETWORK,** according to Claim 15, **characterized in that** the process of combining the various signals received so as to estimate the information really sent in HURTO mode comprises selectively carrying out the coherent sum of the received signals in diversity and multiplying these by a coefficient based on the S/N of the carriers from which the information was received before demodulation, maximum rate combiner, or independently demodulate the information that comes in diversity and carry out a weighted voting according to the demodulation error signal.

17. **PROCESS TO OPTIMISE COMMUNICATION FOR A MULTI-USER OFDM DIGITAL TRANSMISSION SYSTEM OVER THE ELECTRICITY NETWORK,** according to Claim 16, **characterized in that** only in the case where diversity in frequency is used before carrying out the combination process or voting, groups of carriers may be selected depending on estimated S/N distribution, or all of these may be used to optimise the method of estimating the information received in diversity.

18. **PROCESS TO OPTIMISE COMMUNICATION FOR A MULTI-USER OFDM DIGITAL TRANSMISSION SYSTEM OVER THE ELECTRICITY NETWORK,** according to Claim 10, **characterized in that** redundancy introduced by the FEC is dynamically modified to maintain an error rate without altering modulation, number of bits assigned to each of the carriers, and FEC codes with a greater capacity for error correction are used when more noise affects the transmission, preferably in the case where multiple impulsive noises exist.

19. **PROCESS TO OPTIMISE COMMUNICATION FOR A MULTI-USER OFDM DIGITAL TRANSMISSION SYSTEM OVER THE ELECTRICITY NETWORK,** according to Claim 18, **characterized in that** constellations denser than those acceptable are used in transmission and to maintain a determined BER with a determined S/N, the FEC is adapted so as to introduce greater redundancy to achieve said BER and increase transmission capacity.

20. **PROCESS TO OPTIMISE COMMUNICATION FOR A MULTI-USER OFDM DIGITAL TRANSMISSION SYSTEM OVER THE ELECTRICITY NETWORK,** according to Claim 19, **characterized in that** FEC adaptation is carried out packet by packet to offer different qualities of service (QoS); indicating to the other extreme the current configuration of the FEC by means of headers used in the packets where this adaptation of the FEC consists of altering the redundancy generated by the FEC on the signal or altering the FEC code used to make it adequate to noise on the line, or altering both aspects.

21. **PROCESS TO OPTIMISE COMMUNICATION FOR A MULTI-USER OFDM DIGITAL TRANSMISSION SYSTEM OVER THE ELECTRICITY NETWORK**, according to any of the previous Claims, **characterized in that** various combinations of bits per carrier, redundancy, FEC codes, transmission mode, and diversity are selected and stored in the user and head-end equipments in a series of tables referring to the various combinations selected; where the purpose of that selection is to offer various qualities of service (QoS); and where change from one combination to another is communicated packet to packet and where the combination of parameters selected is indicated by means of a reference, preferably to a position in the table, that is sent in the message headers.

22. **PROCESS TO OPTIMISE COMMUNICATION FOR A MULTI-USER OFDM DIGITAL TRANSMISSION SYSTEM OVER THE ELECTRICITY NETWORK**, according to Claim 10, **characterized in that** when the head-end wants to send the same information to a group of user equipments or to all the users in the system, it uses, selectively:

- transmission in HURTO mode;
- constellations modulated with the maximum number of bits per carrier that can be used, provided that all the user equipments in the group will be capable of demodulating this maximum number of bits per carrier maintaining a determined BER;
- dense constellation, but adding sufficient redundancy in the FEC codes so that all the users in the group will be capable of recuperating the information sent.

23. **PROCESS TO OPTIMISE COMMUNICATION FOR A MULTI-USER OFDM DIGITAL TRANSMISSION SYSTEM OVER THE ELECTRICITY NETWORK,** according to Claim 22, **characterized in that** the user equipments in the group with the least number of bits per carrier limit the constellation density that can be used in transmission in this carrier for all the users in the group unless redundancy included in the signal is increased, where the values for bits per carrier are known by the head-end equipment and the head-end indicates the number of bits per carrier used in each carrier by means of message headers that are sent to the group of user equipments, and where it also informs on which users belong to the group, namely, dynamic re-assignment of user groups.

Channel observed towards user A

S/N or bpc

carriers or frequencies

Channel observed towards user B

S/N or bpc

carriers or frequencies

S/N or bpc

carriers or frequencies

1

2

2

FIG. 1

**EP 1 398 885 A1**

## INTERNATIONAL SEARCH REPORT

| | International application No. |
|---|---|
| | PCT/ES02/00245 |

| A. CLASSIFICATION OF SUBJECT MATTER |
|---|
| IPC $^7$ H 04 B 3 / 54 , H 04 J 11 / 00 , H 04 B 17 / 00 . |
| According to International Patent Classification (IPC) or to both national classification and IPC |

| B. FIELDS SEARCHED |
|---|
| Minimum documentation searched (classification system followed by classification symbols) |
| IPC $^7$ H 04 B 3 / 54 , H 04 J 11 / 00 , H 04 B 17 / 00 . |
| Documentation searched other than minimum documentation to the extent that such documents are included in the fields searched |
| Electronic data base consulted during the international search (name of data base and, where practicable, search terms used) |
| EPODOC, WIPL, PAJ, INSPEC , CIBEPAT. |

| C. DOCUMENTS CONSIDERED TO BE RELEVANT |
|---|

| Category* | Citation of document, with indication, where appropriate, of the relevant passages | Relevant to claim No. |
|---|---|---|
| A | WO 0038402 A1 (ENIKIA LLC) 29.06.2000 | |
| P A | EP 1133092 A1 (MITSUBISHI DENKI KABUSHIKI KAISHA) 12.09.2001 | |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 2 9 July 2002 (29.07.02) | 31 July 2002 (31.07.02) |
| Name and mailing address of the ISA/ S.P.T.O | Authorized officer |
| Facsimile No. +34 91 349 53 04 | Telephone No. +34 91 349 53 82 |

Form PCT/ISA/210 (second sheet) (July 1992)

17

## INTERNATIONAL SEARCH REPORT
Information on patent family members

International Application No

PCT/ES02/00245

| Patent document cited in search report | Publication date | Patent familiy member(s) | Publication date |
|---|---|---|---|
| WO 0038402 A | 29.06.2000 | AU 3469000 A | 12.07.2000 |
| EP 1133092 A | 12.09.2001 | WO 0122635 A | 29.03.2001 |
| | | JP 2001094526 A | 06.04.2001 |
| | | JP 3285850B2 B | 27.05.2002 |
| | | NO 20012151 A | 16.07.2001 |
| | | US 2001028678 A | 11.10.2001 |
| | | CN 1321377T T | 07.11.2001 |

Form PCT/ISA/210 (patent family annex) (July 1992)